# EUROPÄISCHE PATENTSCHRIFT

(11) **EP 3 235 097 B1**
(45) Veröffentlichungstag und Bekanntmachung des Hinweises auf die Patenterteilung: **07.04.2021**
(21) Anmeldenummer: 15813380.1
(22) Anmeldetag: 17.12.2015
(51) Int. Cl.: H02J 7/00, B25F 5/00

(54) **SCHALTBARES INTERFACE FÜR WERKZEUGMASCHINEN**
SWITCHABLE INTERFACE FOR MACHINE TOOLS
INTERFACE COMMUTABLE POUR MACHINES-OUTILS

(30) Priorität: 18.12.2014 EP 14198728
(43) Veröffentlichungstag der Anmeldung: 25.10.2017
(73) Patentinhaber: Hilti Aktiengesellschaft, 9494 Schaan (LI)
(72) Erfinder: HUNGER, Markus, 86161 Augsburg (DE)
(74) Vertreter: Hilti Aktiengesellschaft Corporate Intellectual Property
(86) Internationale Anmeldenummer: PCT/EP2015/080134
(87) Internationale Veröffentlichungsnummer: WO 2016/097081

(56) Entgegenhaltungen:
- EP-A1- 0 238 718
- EP-A2- 1 559 511
- WO-A1-2012/084394
- DE-A1-102008 040 061
- US-A1- 2005 077 873

## Beschreibung

Die vorliegende Erfindung bezieht sich auf eine Werkzeugmaschine, enthaltend eine Steuerungseinrichtung und wenigstens eine elektromechanische Schnittstelleneinrichtung zum Verbinden wenigstens eines Akkumulators mit der Werkzeugmaschine sowie zum Versorgen der Werkzeugmaschine mit einer elektrischer Spannung aus dem Akkumulator.

Elektrische Werkzeugmaschinen, wie beispielsweise Bohrhämmer, Kreissägen, Winkelschleifer oder ähnliches, werden häufig mit Hilfe eines Akkumulators mit elektrischer Spannung versorgt. Die Akkumulatoren sind dabei gewöhnlich so gestaltet, dass diese mit der Werkzeugmaschine verbunden und auch wieder gelöst werden können. Die lösbare Verbindung zwischen Akkumulator und Werkzeugmaschine dient unter anderem dazu, einen durch das Arbeiten mit der Werkzeugmaschine entleerten Akkumulator durch eine anderen Akkumulator, auf welchem eine elektrische Spannung zur Abgabe an die Werkzeugmaschine gespeichert ist, zu ersetzen. Ein regelmäßiges Ersetzen eines stark beanspruchten Akkumulators durch einen neuen, leistungsstärkeren Akkumulator ist dabei eine nicht unübliche Maßnahme. Da jedoch die Werkzeugmaschine nicht notwendigerweise auch zusammen mit dem Akkumulator ersetzt wird, besteht häufig das Problem, dass der neue Akkumulator nicht mit dem alten, d.h. dem ursprünglichen Akkumulator identisch ist. Aufgrund von Weiterentwicklungsmassnahmen kann es möglich sein, dass der neue Akkumulator eine neue elektromechanische Schnittstelleneinrichtung aufweist, die nicht zu der entsprechenden Schnittstelle der Werkzeugmaschine passt bzw. nicht kompatibel mit der Schnittstelle der Werkzeugmaschine ist. Als Folge daraus kann ein Inkompatibilitätsproblem zwischen verschiedenen Akkumulatoren und der Werkzeugmaschine bestehen, wodurch unterschiedliche Akkumulatoren nicht mit ein und derselben Schnittstelle der Werkzeugmaschine verbunden werden können

Die Druckschriften DE 10 2008 040061 A1 und US 2005/077873 A1 stellen den relevanten Stand der Technik dar und offenbaren Elektrowerkzeugmaschinen, welche an verschiedene Akkumulatoren mit unterschiedlichen Schnittstellen angeschlossen werden können.

Aufgabe der vorliegenden Erfindung ist es daher, das vorstehend genannte Problem zu lösen und insbesondere eine Werkzeugmaschine zur Verfügung zu stellen, mit der die Kompatibilität zwischen dem Akkumulator und der Werkzeugmaschine verbessert wird.

Diese Aufgabe wird erfindungsgemäss durch den Gegenstand des unabhängigen Anspruchs 1 gelöst. Weitere Ausführungsformen des erfindungsgemässen Gegenstands finden sich in den abhängigen Unteransprüchen.

Es wird eine Werkzeugmaschine bereitgestellt, enthaltend eine Steuerungseinrichtung und wenigstens eine elektromechanische Schnittstelleneinrichtung zum Verbinden wenigstens eines Akkumulators mit der Werkzeugmaschine sowie zum Versorgen der Werkzeugmaschine mit einer elektrischer Spannung aus dem Akkumulator.

Erfindungsgemäß ist vorgesehen, dass die Schnittstelleneinrichtung wenigstens eine erste Anschlussstelle und eine zweite Anschlussstelle enthält und die Schnittstelleneinrichtung in wenigstens eine erste Position und in eine zweite Position einstellbar ist, wobei die erste Anschlussstelle zum Versorgen der Werkzeugmaschine mit elektrischer Spannung aus einem ersten Akkumulator verwendbar ist, wenn die Schnittstelleneinrichtung in der ersten Position eingestellt ist und die zweite Anschlussstelle zum Versorgen der Werkzeugmaschine mit elektrischer Spannung aus einem zweiten Akkumulator verwendbar ist, wenn die Schnittstelleneinrichtung in der zweiten Position eingestellt ist.

Gemäß einer weiteren vorteilhaften Ausführungsform der vorliegenden Erfindung kann es möglich sein, dass die erste Anschlussstelle eine erste Anzahl an Anschlusselementen und die zweite Anschlussstelle eine zweite Anzahl an Anschlusselementen enthält, wobei die erste Anzahl an Anschlusselementen einer Anzahl an Kontaktelementen des ersten Akkumulators und die zweite Anzahl an Anschlusselementen einer Anzahl an Kontaktelementen des zweiten Akkumulators entspricht. Hierdurch wird dem Anwender der Werkzeugmaschine auf einfache Art und Weise angezeigt, an welche Anschlussstelle der Schnittstelleneinrichtung der entsprechende Akkumulator angeschlossen werden soll.

Um auf einfache Art und Weise eine korrekte Versorgung der Werkzeugmaschine mit elektrischer Spannung durch einen entsprechend an die Werkzeugmaschine angeschlossenen Akkumulator zu gewährleisten, kann gemäß einer weiteren vorteilhaften Ausführungsform der vorliegenden Erfindung es möglich sein, dass eine erste Konfiguration zum Versorgen der Werkzeugmaschine mit elektrischer Spannung aus einem ersten Akkumulator gewählt wird, wenn die Schnittstelleneinrichtung in der ersten Position eingestellt ist und der erste Akkumulator mit der ersten Anschlussstelle verbunden ist, und dass eine zweite Konfiguration zum Versorgen der Werkzeugmaschine mit elektrischer Spannung aus einem zweiten Akkumulator gewählt wird, wenn die Schnittstelleneinrichtung in der zweiten Position eingestellt ist und der zweite Akkumulator mit der zweiten Anschlussstelle verbunden ist.

Entsprechend einer weiteren vorteilhaften Ausführungsform der vorliegenden Erfindung kann es möglich sein, dass die Schnittstelleneinrichtung eine Anbindungsstelle mit einer Anzahl an Anbindungselementen zum Verbinden der Schnittstelleneinrichtung mit der Steuerungseinrichtung enthält, wobei die Anzahl an Anbindungselementen der größeren Anzahl an Anschlusselementen der ersten oder zweiten Anschlussstelle entspricht. Hierdurch kann sichergestellt werden, dass sowohl die erste Anschlussstelle mit einer ersten Anzahl an Anschlusselementen als auch die zweite Anschlussstelle mit einer zweiten Anzahl an Anschlusselementen mit der Anbindungsstelle verbindbar ist.

Gemäß einer weiteren vorteilhaften Ausführungsform der vorliegenden Erfindung kann es möglich sein, dass die Schnittstelleneinrichtung eine erste Anbindungsstelle und eine zweite Anbindungsstelle enthält zum Verbinden der Schnittstelleneinrichtung mit der Steuerungseinrichtung, wobei die erste Anbindungsstelle eine erste Anzahl an Anbindungselementen und die zweite Anbindungsstelle eine zweite Anzahl an Anbindungselementen enthält, wobei die erste Anzahl an Anbindungselementen der ersten Anzahl an Anschlusselementen und die zweite Anzahl an Anbindungselementen der zweiten Anzahl an Anschlusselementen entspricht. Durch die Verwendung einer ersten und zweiten Anbindungsstelle ist es möglich, eine relativ einfach aufgebaute bzw. simple Elektronik zur Versorgung der Werkzeugmaschine mit elektrischer Spannung von dem Akkumulator zu verwenden, da anhand der jeweiligen Verbindung der ersten oder zweiten Anschlussstelle mit der zugehörigen ersten oder zweiten Anbindungsstelle bereits eine eindeutige Bestimmung der ersten oder zweiten Position der Schnittstelleneinrichtung bzw. des ersten oder zweiten Akkumulators vorliegt. Die hierbei verwendete Elektronik zur Steuerung der Versorgung der Werkzeugmaschine mit elektrischer Spannung kann daher ohne Einrichtung zum Erkennen der ersten oder zweiten Position der Schnittstelleneinrichtung bzw. zum Erkennen des jeweils mit der Schnittstelleneinrichtung angeschlossenen ersten oder zweiten Akkumulators ausgestaltet sein.

Entsprechend einer weiteren vorteilhaften Ausführungsform der vorliegenden Erfindung kann es möglich sein, dass anhand der Anzahl an Verbindungen zwischen Anschlusselementen und Anbindungselementen die erste oder zweite Position der Schnittstelleneinrichtung und/oder der erste oder zweite Akkumulator, welcher mit der Schnittstelleneinrichtung verbunden ist, erkennbar ist. Hierdurch kann auf einfache Art und Weise das Erkennen der ersten oder zweiten Position der Schnittstelleneinrichtung bzw. das Erkennen des jeweils mit der Schnittstelleneinrichtung angeschlossenen ersten oder zweiten Akkumulators ausgestaltet sein.

Entsprechend einer weiteren vorteilhaften Ausführungsform der vorliegenden Erfindung kann es möglich sein, dass mindestens ein Anschlusselement der ersten Anschlussstelle sowie mindestens ein Anschlusselement der zweiten Anschlussstelle wenigstens zum Empfangen von Informationen von dem ersten Akkumulator und dem zweiten Akkumulator an die Werkzeugmaschine ausgestaltet ist, sodass entsprechend dem jeweils angeschlossenen ersten oder zweiten Akkumulator eine erste Konfiguration zum Versorgen der Werkzeugmaschine mit elektrischer Spannung aus einem ersten Akkumulator oder eine zweite Konfiguration zum Versorgen der Werkzeugmaschine mit elektrischer Spannung aus einem zweiten Akkumulator einstellbar ist.

Um eine möglichst einfache sowie zuverlässige Erkennung der Schnittstelleneinrichtung in der ersten oder zweiten Position für das Ladegerät zu gewährleisten, kann gemäß einer weiteren vorteilhaften Ausführungsform der vorliegenden Erfindung es möglich sein, dass wenigstens ein Mikroschalter vorgesehen ist zum Erkennen, ob die Schnittstelleneinrichtung in der ersten Position oder zweiten Position eingestellt ist. Der Mikroschalter kann beispielsweise zwischen der Schnittstelleneinrichtung und einem Gehäuse der Ladevorrichtung positioniert sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Seitenansicht einer erfindungsgemäßen Werkzeugmaschine gemäß einer ersten Ausführungsform mit einer Schnittstelleneinrichtung in einer ersten Position zusammen mit einem ersten Akkumulator;
- Fig. 2: eine schematische Seitenansicht einer erfindungsgemäßen Werkzeugmaschine gemäß der ersten Ausführungsform mit der Schnittstelleneinrichtung in einer zweiten Position zusammen mit einem zweiten Akkumulator;
- Fig. 3: eine schematische Ansicht der Schnittstelleneinrichtung in der ersten Position gemäß der ersten Ausführungsform;
- Fig. 4: eine schematische Ansicht der Schnittstelleneinrichtung in einer zweiten Position gemäß der ersten Ausführungsform;
- Fig. 5: eine schematische Ansicht der Schnittstelleneinrichtung in einer ersten Position gemäß einer zweiten Ausführungsform;
- Fig. 6: eine schematische Ansicht der Schnittstelleneinrichtung in einer zweiten Position gemäß der zweiten Ausführungsform;
- Fig. 7: eine schematische Ansicht der Schnittstelleneinrichtung in einer ersten Position gemäß einer dritten Ausführungsform;
- Fig. 8: eine schematische Ansicht der Schnittstelleneinrichtung in einer zweiten Position gemäß der dritten Ausführungsform;
- Fig. 9: eine schematische Ansicht der Schnittstelleneinrichtung in einer ersten Position gemäß einer vierten Ausführungsform;
- Fig. 10: eine schematische Ansicht der Schnittstelleneinrichtung in einer zweiten Position gemäß der vierten Ausführungsform;
- Fig. 11: eine schematische Ansicht der Schnittstelleneinrichtung in einer ersten Position gemäß einer fünften Ausführungsform;
- Fig. 12: eine schematische Ansicht der Schnittstelleneinrichtung in einer zweiten Position gemäß der fünften Ausführungsform;
- Fig. 13: eine schematische Ansicht der Schnittstelleneinrichtung in einer ersten Position gemäß einer sechsten Ausführungsform;
- Fig. 14: eine schematische Ansicht der Schnittstelleneinrichtung in einer zweiten Position gemäß der sechsten Ausführungsform;
- Fig. 15: eine Seitenansicht der Schnittstelleneinrichtung in einer ersten Position gemäß einer siebten Ausführungsform und einem ersten Akkumulator;
- Fig. 16: eine Draufsicht auf die Schnittstelleneinrichtung in der ersten Position gemäß der siebten Ausführungsform und einem ersten Akkumulator;
- Fig. 17: eine Seitenansicht der Schnittstelleneinrichtung in einer zweiten Position gemäß der siebten Ausführungsform und einem zweiten Akkumulator;
- Fig. 18: eine Draufsicht auf die erfindungsgemäße Ladevorrichtung gemäß der siebten Ausführungsform mit der Schnittstelleneinrichtung in einer zweiten Position;

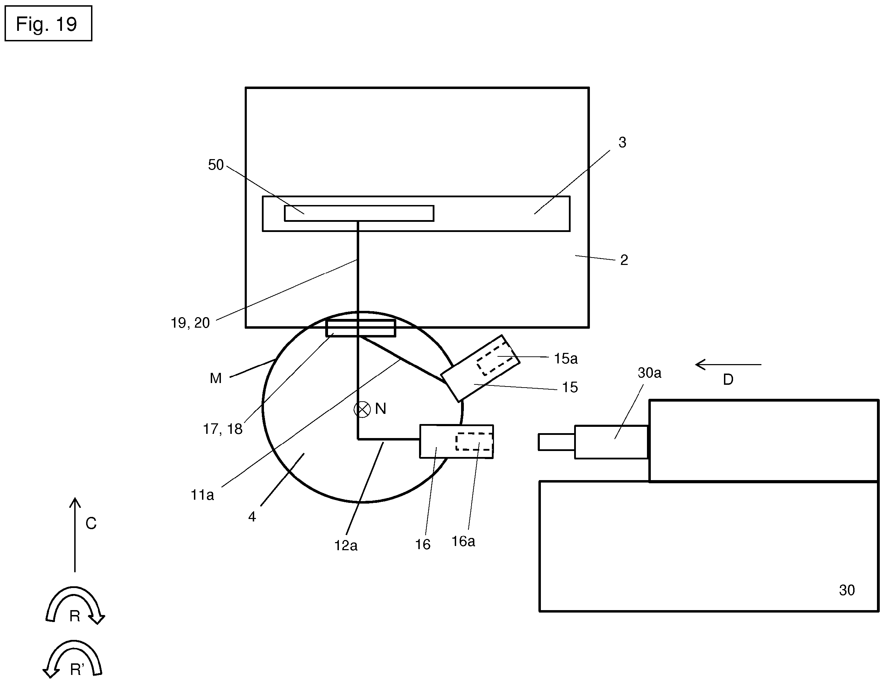

- Fig. 19: eine Seitenansicht der erfindungsgemäßen Ladevorrichtung gemäß einer achten Ausführungsform mit der Schnittstelleneinrichtung in einer ersten Position und einem ersten Akkumulator; und

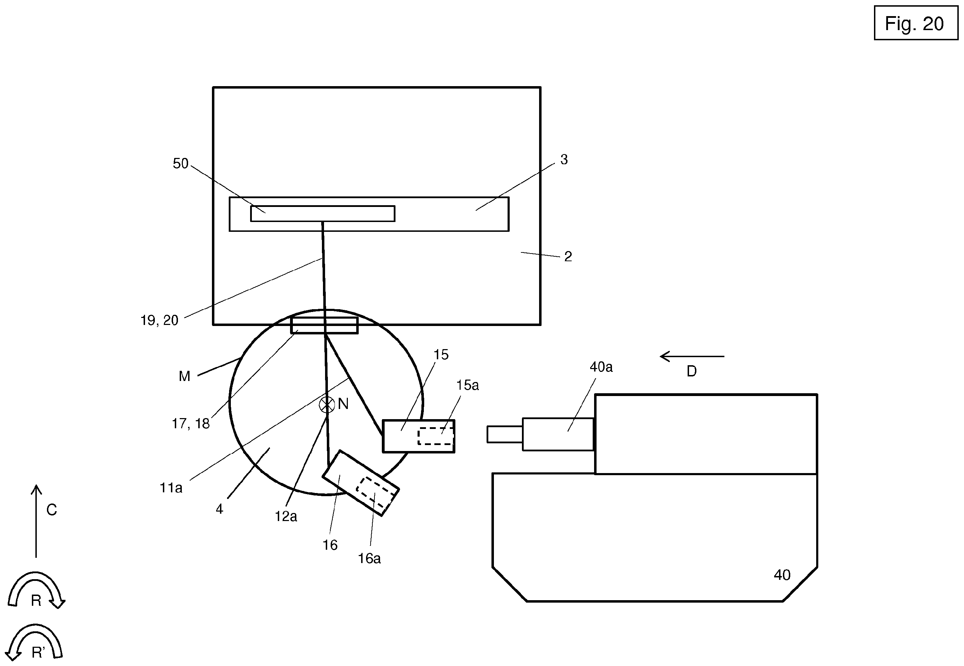

- Fig. 20: eine Seitenansicht der erfindungsgemäßen Ladevorrichtung gemäß der achten Ausführungsform mit der Schnittstelleneinrichtung in einer zweiten Position und einem zweiten Akkumulator.

### Ausführungsbeispiel:

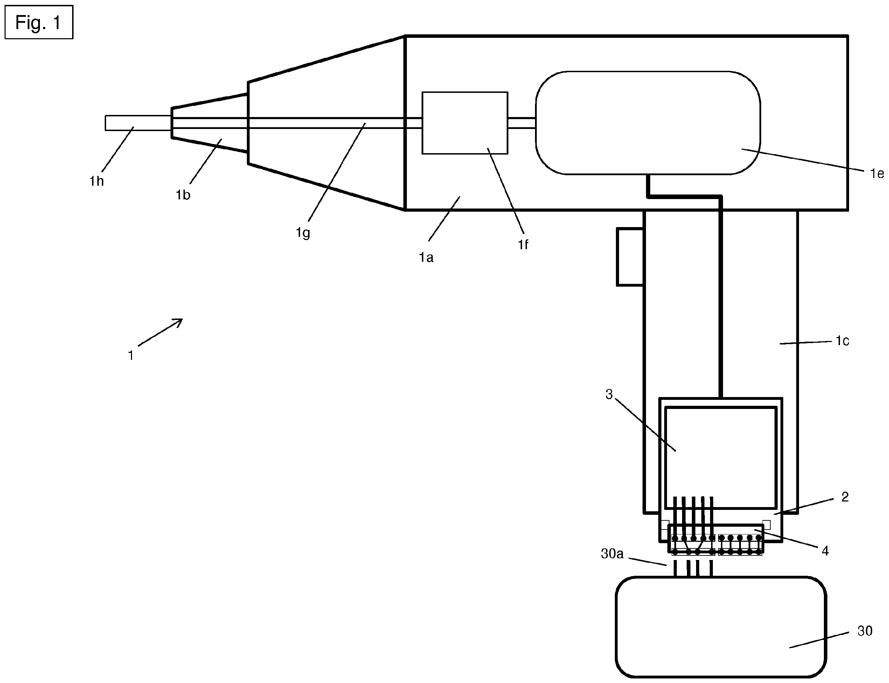

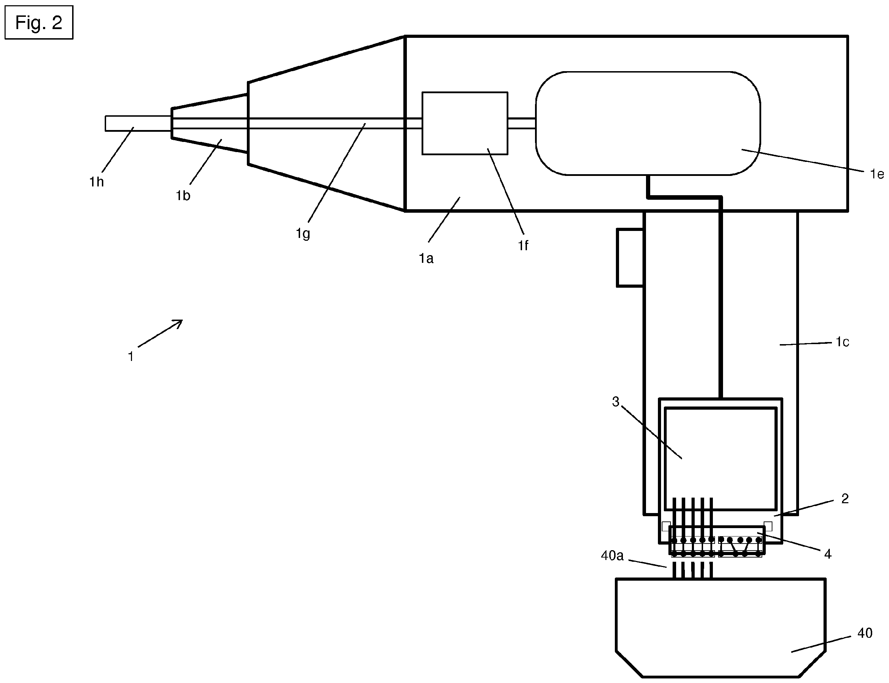

Fig. 1 und 2 zeigen eine erfindungsgemäße Werkzeugmaschine 1 zum Laden wenigstens eines Akkumulators gemäß einer ersten Ausführungsform. Die Werkzeugmaschine 1 ist dabei in Form eines Akku-Schraubers ausgestaltet. Es ist jedoch auch möglich, dass die Werkzeugmaschine 1 in Form eines Bohrhammers, einer Bohrmaschine, einer Säge, eines Schleifgeräts oder ähnlichem ausgestaltet ist.

Die Werkzeugmaschine 1 enthält im Wesentlichen ein Werkzeuggehäuse 1a, eine Werkzeugaufnahme 1b, einen Handgriff 1c sowie eine Akku-Halterung 2. In dem Werkzeuggehäuse 1a ist ein Elektromotor 1e, ein Getriebe 1f und eine Abtriebswelle 1g angeordnet. Ein in dem Elektromotor 1e erzeugtes Drehmoment wird über das Getriebe 1f und die Abtriebswelle 1g an die Werkzeugaufnahme 1b gegeben. In der Werkzeugaufnahme 1b kann ein Werkzeug 1h in Form eines Bohrers positioniert sein. Das Werkzeug ist in den Figuren nicht dargestellt.

An dem Handgriff 1c kann die als Akku-Schrauber ausgestaltete Werkzeugmaschine 1 von einem (nicht gezeigten) Anwender gehalten werden.

Die Akku-Halterung 2 dient zur Aufnahme und zum Halten eines ersten Akkumulators 30 oder zweiten Akkumulators 40. Die Akku-Halterung 2 enthält im Wesentlichen eine Steuerungseinrichtung 3 und eine Schnittstelleneinrichtung 4. In Fig. 1 ist die Werkzeugmaschine 1 mit dem ersten Akkumulator 30 gezeigt und in Fig. 2 ist die Werkzeugmaschine 1 mit dem zweiten Akkumulator 40 gezeigt.

Die Schnittstelleneinrichtung 4 ist dabei so in Akku-Halterung 2 und dem Handgriff 1c positioniert, dass der erste Akkumulator 30 oder ein zweiter Akkumulator 40 mit der Schnittstelleneinrichtung 4 und damit mit der Werkzeugmaschine 1 verbunden werden kann. Der erste Akkumulator 30 und auch der zweite Akkumulator 40 dienen zur Versorgung der Werkzeugmaschine 1 mit elektrischer Energie, insbesondere mit elektrischer Spannung. Es ist zu beachten, dass sich der erste Akkumulator 30 und der zweite Akkumulator 40 wenigstens anhand der Anzahl der Kontakte, mit denen der erste Akkumulator 30 oder der zweite Akkumulator 40 mit der Schnittstelleneinrichtung 4 verbunden werden kann, voneinander unterscheiden. Wie in Fig. 1 gezeigt, weist der erste Akkumulator 30 dabei vier Kontakte 30a auf, mit denen der erste Akkumulator 30 mit der Schnittstelleneinrichtung 4 zur Übertragung einer elektrischen Spannung und/oder zum Senden und Empfangen von Informationsdaten in der Lage ist. Wie in Fig. 2 gezeigt, weist der zweite Akkumulator 40 dabei fünf Kontakte 40a auf, mit denen der zweite Akkumulator 40 mit der Schnittstelleneinrichtung 4 zur Übertragung einer elektrischen Spannung und/oder zum Senden und Empfangen von Informationsdaten in der Lage ist.

Auf der Steuerungseinrichtung 3 ist eine Elektronik enthalten zur Steuerung und Regelung der Werkzeugmaschine 1 und insbesondere zur Steuerung und Regelung der Versorgung der Werkzeugmaschine 1 mit elektrischer Spannung durch den ersten Akkumulator 30 oder zweiten Akkumulator 40. Die Steuerungseinrichtung 3 verfügt dabei über eine erste Konfiguration zum Versorgen der Werkzeugmaschine 1 mit elektrischer Spannung aus einem ersten Akkumulator 30. Des Weiteren verfügt die Steuerungseinrichtung 3 über eine zweite Konfiguration zum Versorgen der Werkzeugmaschine 1 mit elektrischer Spannung aus einem zweiten Akkumulator 40.

Die Steuerungseinrichtung 3 ist so ausgestaltet, dass automatisch die erste Konfiguration ausgewählt und eingestellt wird, wenn die Werkzeugmaschine 1 erkennt, dass der erste Akkumulator 30 mit der Schnittstelleneinrichtung 4 verbunden ist. Darüber hinaus wird die zweite Konfiguration ausgewählt und eingestellt wird, wenn die Werkzeugmaschine 1 erkennt, dass der zweite Akkumulator 40 mit der Schnittstelleneinrichtung 4 verbunden ist.

Die Schnittstelleneinrichtung 4 ist so ausgestaltet, dass elektrische Spannung, Informationen und Daten bi-direktional zwischen der Ladevorrichtung 1 und dem jeweils angeschlossen Akkumulator 30, 40 ausgetauscht werden können.

Die Schnittstelleneinrichtung 4 enthält eine erste Anschlussstelle 15 und eine zweite Anschlussstelle 16. Die erste Anschlussstelle 15 enthält vier Anschlusselemente 15a, 15b, 15c, 15d sowie fünf Anbindungselemente 17a, 17b, 17c, 17d, 17e. Die zweite Anschlussstelle 16 enthält fünf Anschlusselemente 16a, 16b, 16c, 16d, 16e sowie fünf Anbindungselemente 18a, 18b, 18c, 18d, 18e. In der ersten Anschlussstelle 15 stehen die vier Anschlusselemente 15a, 15b, 15c, 15d mit den fünf Anbindungselementen 17a, 17b, 17c, 17d, 17e über vier Anbindungsleitungen 11a, 11b, 11c 11d in Verbindung. In der zweiten Anschlussstelle 16 stehen die fünf Anschlusselemente 16a, 16b, 16c, 16d, 16e mit den fünf Anbindungselementen 18a, 18b, 18c, 18d, 18e über fünf Anbindungsleitungen 12a, 12b, 12c, 12d, 12e in Verbindung.

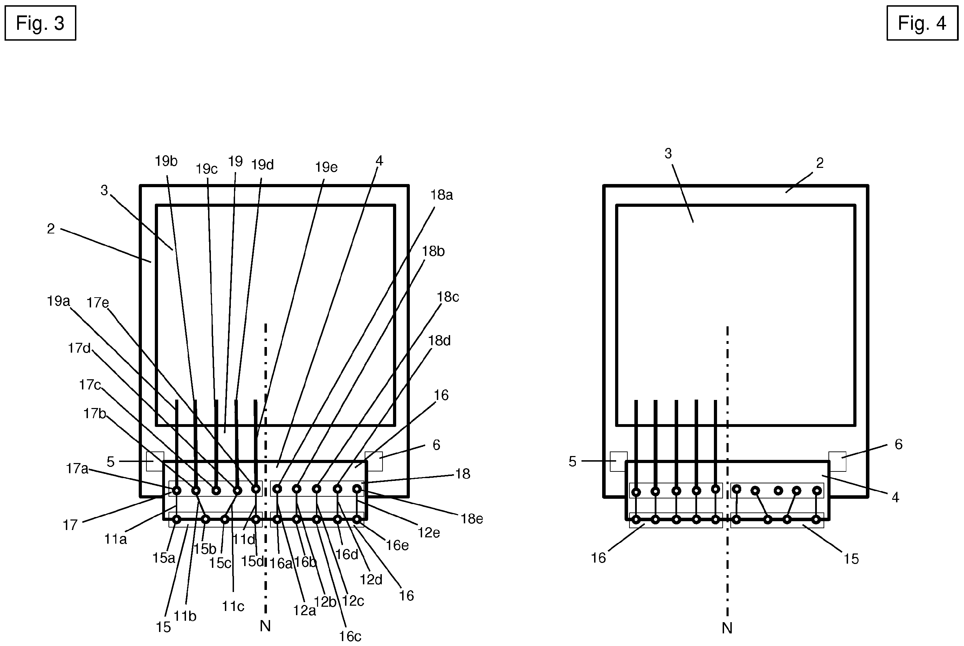

In der ersten Anschlussstelle 15 sind die vier Anschlusselemente 15a, 15b, 15c, 15d dabei so mit den fünf Anbindungselementen 17a, 17b, 17c, 17d, 17e verbunden, dass ein Anbindungselement 17c nicht mit einem der vier Anschlusselement 15a, 15b, 15c, 15d verbunden ist. Die Anschlusselemente 15a, 15b, 15c, 15d der ersten Anschlussstelle 15 dienen dazu, mit den Kontakten 30a eines ersten Akkumulators 30 verbunden zu werden. Die Anschlusselemente 16a, 16b, 16c, 16d, 16e der zweiten Anschlussstelle 16 dienen dazu, mit den Kontakten 40a eines zweiten Akkumulators 40 verbunden zu werden. Es ist somit vorgesehen, dass an die erste Anschlussstelle 15 ein erster Akkumulator 30 und an die zweite Anschlussstelle 16 ein zweiter Akkumulator 40 anschließbar ist. Weder der erste Akkumulator 30 noch der zweite Akkumulator 40 sind in den Figuren 3 bis 14 gezeigt.

Gemäß der ersten Ausführungsform der Werkzeugmaschine 1 enthält die Steuerungseinrichtung 3 eine Verbindungseinrichtung 19 mit fünf Verbindungsleitungen 19a, 19b, 19c, 19d, 19e mit denen die fünf Anbindungselemente 17a, 17b, 17c, 17d, 17e der ersten Anschlussstelle 15 oder die fünf Anbindungselemente 18a, 18b, 18c, 18d, 18e der zweiten Anschlussstelle 16 mit der Steuerungseinrichtung 3 verbunden werden können.

Wie in den Figuren 1 und 2 dargestellt, ist die Werkzeugmaschine 1 gemäß der ersten Ausführungsform so ausgestaltet, dass die Schnittstelleneinrichtung 4 in einer ersten Position oder in einer zweiten Position einstellbar ist. In Fig. 1 befindet sich die Schnittstelleneinrichtung 4 in der ersten Position und in Fig. 2 befindet sich die Schnittstelleneinrichtung 4 in der zweiten Position.

Wie in Fig. 1 gezeigt, ist die Schnittstelleneinrichtung 4 in der ersten Position so ausgerichtet, dass die fünf Anbindungselemente 17a, 17b, 17c, 17d, 17e der ersten Anschlussstelle 15 mit den fünf Verbindungsleitungen 19a, 19b, 19c, 19d, 19e der Steuerungseinrichtung 3 in Verbindung stehen. In der ersten Position der Schnittstelleneinrichtung 4 besteht somit innerhalb der ersten Anschlussstelle 15 eine Verbindung von den vier Anschlusselementen 15a, 15b, 15c, 15d über vier der fünf Anbindungselemente 17a, 17b, 17d, 17e zu der Steuerungseinrichtung 3, sodass der mit den vier Anschlusselementen 15a, 15b, 15c, 15d verbundener Akkumulator 30 über die Steuerungseinrichtung 3 mit elektrischer Spannung versorgt werden kann.

Um die Schnittstellenvorrichtung 4 von der ersten Position in die zweite Position zu bringen, wird (gemäß der ersten Ausführungsform der Werkzeugmaschine 1) die Schnittstelleneinrichtung 4 von dem Akku-Halterung 2 der Werkzeugmaschine 1 entfernt, 180° um die Achse N gedreht und wieder an dem Akku-Halterung 2 der Werkzeugmaschine 1 befestigt. Die Schnittstelleneinrichtung 4 befindet sich in der ersten und zweiten Position an derselben Stelle des Gehäuses 2 der Ladevorrichtung 1, jedoch ist die Schnittstelleneinrichtung 4 in der ersten und zweiten Position in unterschiedlichen Ausrichtungen (180° um die Achse N gedreht) zu der Akku-Halterung 2 der Werkzeugmaschine 1 positioniert. Wie nachfolgend anhand der weiteren Ausführungsbeispiele der Werkzeugmaschine 1 beschrieben wird, kann die Schnittstelleneinrichtung 4 auf unterschiedliche Weise von der ersten Position in die zweite Position bewegt bzw. gebracht werden.

Wie in Fig. 2 gezeigt, ist die Schnittstelleneinrichtung 4 in der zweiten Position so ausgerichtet, dass die fünf Anbindungselemente 18a, 18b, 18c, 18d, 18e der zweiten Anschlussstelle 16 mit den fünf Verbindungsleitungen 19a, 19b, 19c, 19d, 19e der Steuerungseinrichtung 3 in Verbindung stehen. In der zweiten Position besteht somit in der zweiten Anschlussstelle 16 eine Verbindung von den fünf Anschlusselementen 16a, 16b, 16c, 16d, 16e über die fünf Anbindungselemente 18a, 18b, 18c, 18d, 18e zu der Steuerungseinrichtung 3, sodass der mit den fünf Anschlusselementen 16a, 16b, 16c, 16d, 16e verbundener Akkumulator 40 über die Steuerungseinrichtung 3 mit elektrischer Spannung versorgt werden kann.

Wie in Fig. 1 und 2 dargestellt, sind ein erster Mikroschalter 5 und zweite Mikroschalter 6 sind so in der Akku-Halterung 2 der Werkzeugmaschine 1 positioniert, dass die Schnittstelleneinrichtung 4 den ersten Mikroschalter 5 aktiviert, wenn sich die Schnittstelleneinrichtung 4 in der ersten Position befindet und den zweiten Mikroschalter 6 aktiviert, wenn sich die Schnittstelleneinrichtung 4 in der zweiten Position befindet. Durch die jeweilige Aktivierung des ersten oder zweiten Mikroschalters 5, 6 erkennt die Werkzeugmaschine 1, ob sich die Schnittstelleneinrichtung 4 in der ersten oder zweiten Position befindet. Der erste und zweite Mikroschalter 5, 6 sind dabei entsprechend mit der Steuerungseinrichtung 3 verbunden.

Darüber hinaus erkennt die Werkzeugmaschine 1 auch anhand der Anzahl an Verbindungen zwischen den Anschlusselementen 15a, 15b, 15c, 15d, 16a, 16b, 16c, 16d, 16e und Anbindungselementen 17a, 17b, 17c, 17d, 17e, 18a, 18b, 18c, 18d, 18e, ob sich die Schnittstelleneinrichtung 4 in der ersten oder zweiten Position befindet. Hierzu erkennt die Werkzeugmaschine 1, dass in der ersten Position der Schnittstelleneinrichtung 4 das mittlere Anbindungselement 17c keine Verbindung mit einem Anschlusselement 15a, 15b, 15c, 15d der ersten Anschlussstelle 15 aufweist (vgl. Fig. 1). Durch die Verbindung der vier Anbindungselemente 17a, 17b, 17d, 17e mit den vier Anschlusselementen 15a, 15b, 15c, 15d sowie durch das "freie" (d.h. nicht verbundene) fünfte Anbindungselement 17c erkennt die Steuerungseinrichtung 3, dass sich die Schnittstelleneinrichtung 4 in der ersten Position befindet und dass ein erster Akkumulator 30 mit der Schnittstelleneinrichtung 4 verbunden ist bzw. sein kann. Wenn die Steuerungseinrichtung 3 erkennt, dass sich die Schnittstelleneinrichtung 4 in der ersten Position befindet, wird in der Steuerungseinrichtung 3 die erste Konfiguration zur Versorgung der Werkzeugmaschine 1 mit elektrischer Spannung aus dem ersten Akkumulator 30 gewählt.

In Fig. 3 und 4 ist eine zweite Ausführungsform der Werkzeugmaschine 1 dargestellt. Die Konfigurationen zur Versorgung der Werkzeugmaschine 1 mit elektrischer Spannung gemäß der zweiten Ausführungsform ist im Wesentlichen identisch mit der Konfigurationen zur Versorgung der Werkzeugmaschine 1 mit elektrischer Spannung gemäß der ersten Ausführungsform. In Fig. 3 befindet sich die Schnittstelleneinrichtung 4 in der ersten Position und in Fig. 4 befindet sich die Schnittstelleneinrichtung 4 in der zweiten Position. Im Gegensatz zu der ersten Ausführungsform ist die Werkzeugmaschine 1 gemäß der zweiten Ausführungsform so ausgestaltet, dass die Schnittstelleneinrichtung 4 durch ein Verschieben reversibel von der ersten in die zweite Position gebracht werden kann. Zum Wechseln der Schnittstelleneinrichtung 4 von der ersten Position in die zweite Position wird die Schnittstelleneinrichtung 4 in Richtung A relativ zu dem Gehäuse 2 der Ladevorrichtung 1 verschoben (vgl. Fig. 3). Zur Rückführung der Schnittstelleneinrichtung 4 von der zweiten Position in die erste Position wird die Schnittstelleneinrichtung 4 in Richtung B relativ zu der Akku-Halterung 2 verschoben (vgl. Fig. 4).

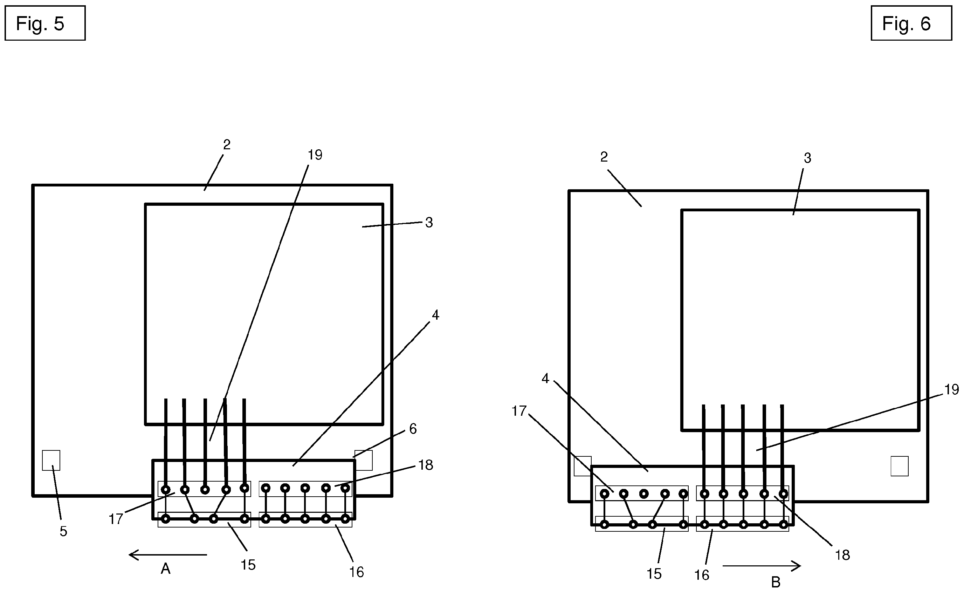

In Fig. 5 und 6 ist eine dritte Ausführungsform der Werkzeugmaschine 1 dargestellt. Gemäß der dritten Ausführungsform und im Unterschied zu der ersten Ausführungsform ist die Schnittstelleneinrichtung 4 in Form eines Quaders gestaltet. In Fig. 4 und 5 ist lediglich eine erste Seite 14a, eine zweite Seite 14b, eine dritte Seite 14c und eine vierte Seite 14d dargestellt. Die Schnittstelleneinrichtung 4 enthält dabei eine erste Anschlussstelle 15, eine zweite Anschlussstelle 16, eine erste Anbindungsstelle 17 und eine zweite Anbindungsstelle 18. Wie in Fig. 4 gezeigt, ist die erste Anschlussstelle 15 an der ersten Seite 14a der als Quaders ausgestalteten Schnittstelleneinrichtung 4 positioniert. An der zweiten Seite 14b des Quaders ist die erste Anbindungsstelle 17 positioniert. Die zweite Anschlussstelle 16 ist an der dritten Seite 14c des Quaders positioniert. An der vierten Seite 14d des Quaders ist die zweite Anbindungsstelle 18 positioniert. Die erste Anschlussstelle 15 enthält vier Anschlusselemente 15a, 15b, 15c, 15d und die zweite Anschlussstelle 16 enthält fünf Anschlusselemente 16a, 16b, 16c, 16d, 16e. Die erste Anbindungsstelle 17 enthält vier Anbindungselemente 17a, 17b, 17c, 17d und die zweite Anbindungsstelle 18 enthält fünf Anbindungselemente 18a, 18b, 18c, 18d, 18e. Des Weiteren enthält die Steuerungseinrichtung 4 gemäß der dritten Ausführungsform eine erste Verbindungseinrichtung 19 und eine zweite Verbindungseinrichtung 20. Die erste Verbindungseinrichtung 19 enthält wiederum vier Verbindungsleitungen 19a, 19b, 19c, 19d und die zweite Verbindungseinrichtung 20 enthält fünf Verbindungsleitungen 20a, 20b, 20c, 20d, 20e. Die erste Verbindungseinrichtung 19 dient dazu, die Schnittstelleneinrichtung 4 über die erste Anbindungsstelle 17 mit der Steuerungseinrichtung 3 zu verbinden. Die zweite Verbindungseinrichtung 20 dient dazu, die Schnittstelleneinrichtung 4 über die zweite Anbindungsstelle 18 mit der Steuerungseinrichtung 3 zu verbinden.

In Fig. 5 ist die Schnittstelleneinrichtung 4 in der ersten Position dargestellt, wobei die als Quader ausgestaltete Schnittstelleneinrichtung 4 so zu der Akku-Halterung 2 ausgerichtet ist, dass die erste Anbindungsstelle 17 mit der ersten Verbindungseinrichtung 19 verbunden ist. Die vier Anbindungselemente 17a, 17b, 17c, 17d der ersten Anbindungsstelle 17 sind dabei mit den vier Verbindungsleitungen 19a, 19b, 19c, 19d der ersten Verbindungseinrichtung 19 verbunden. Über vier Anbindungsleitungen 11a, 11b, 11c, 11d stehen die vier Anbindungselemente 17a, 17b, 17c, 17d mit den vier Anschlusselementen 15a, 15b, 15c, 15d in Verbindung. Wenn die erste Anbindungsstelle 17 mit der ersten Verbindungseinrichtung 19 verbunden ist, erkennt die Werkzeugmaschine 1, dass sich die Schnittstelleneinrichtung 4 in der ersten Position befindet und dass ein erster Akkumulator 30 an der ersten Anschlussstelle 15 angeschlossen ist oder angeschlossen werden kann. Als Folge dessen wird die erste Konfiguration zur Versorgung der Werkzeugmaschine 1 mit elektrischer Spannung durch den ersten Akkumulator 30 in der Steuerungseinrichtung 3 ausgewählt und eingestellt.

Um die als Quader ausgestaltete Schnittstelleneinrichtung 4 gemäß der dritten Ausführungsform der Werkzeugmaschine 1 von der ersten Position (Fig. 5) in die zweite Position (Fig. 6) zu bewegen, wird die Schnittstelleneinrichtung 4 von der Akku-Halterung 2 entfernt, entsprechend um 180° in Pfeilrichtung R gedreht und wieder mit der Akku-Halterung 2 verbunden (vgl. Fig. 5 zu Fig. 6).

In Fig. 6 ist die Schnittstelleneinrichtung 4 in der zweiten Position dargestellt, wobei die als Quader ausgestaltete Schnittstelleneinrichtung 4 so zu der Akku-Halterung 2 der Werkzeugmaschine 1 ausgerichtet ist, dass die zweite Anbindungsstelle 17 mit der zweiten Verbindungseinrichtung 20 verbunden ist. Die fünf Anbindungselemente 18a, 18b, 18c, 18d, 18e der zweiten Anbindungsstelle 18 sind dabei mit den fünf Verbindungsleitungen 20a, 20b, 20c, 20d, 20e der zweiten Verbindungseinrichtung 20 verbunden. Über fünf Anbindungsleitungen 12a, 12b, 12c, 12d, 12e stehen die fünf Anbindungselemente 18a, 18b, 18c, 18d, 18e mit den fünf Anschlusselementen 16a, 16b, 16c, 16d, 16e in Verbindung. Wenn die zweite Anbindungsstelle 18 mit der zweiten Verbindungseinrichtung 20 verbunden ist, erkennt die Werkzeugmaschine 1, dass sich die Schnittstelleneinrichtung 4 in der zweiten Position befindet und dass ein zweiter Akkumulator 40 an der zweiten Anschlussstelle 16 angeschlossen ist oder angeschlossen werden kann. Als Folge dessen wird die zweite Konfiguration zur Versorgung der Werkzeugmaschine 1 mit elektrischer Spannung durch den zweiten Akkumulator 40 ausgewählt und eingestellt.

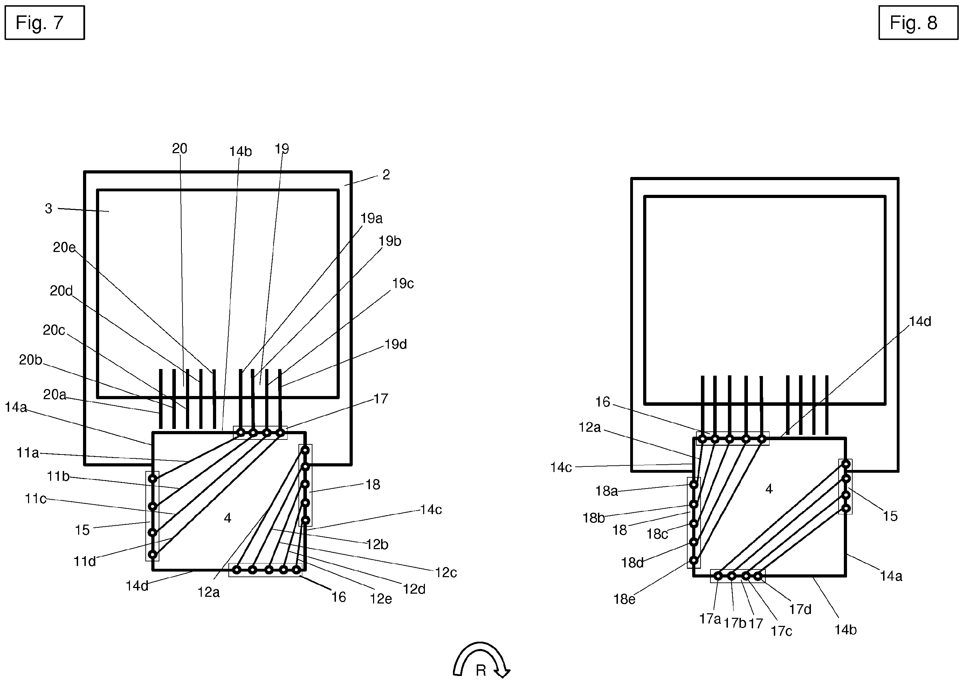

In Fig. 7 und 8 ist eine vierte Ausführungsform der Ladevorrichtung 1 dargestellt. Gemäß der dritten Ausführungsform und im Unterschied zu der ersten Ausführungsform ist die Schnittstelleneinrichtung 4 ebenfalls in Form eines Quaders gestaltet.

In Fig. 7 und 8 ist lediglich eine erste Seite 14a, eine zweite Seite 14b, eine dritte Seite 14c und eine vierte Seite 14d dargestellt. Die Schnittstelleneinrichtung 4 enthält dabei eine erste Anschlussstelle 15, eine zweite Anschlussstelle 16 und eine Anbindungsstelle 17. Wie in Fig. 7 gezeigt, ist die erste Anschlussstelle 15 an der ersten Seite 14a der als Quaders ausgestalteten Schnittstelleneinrichtung 4 positioniert. Die zweite Anschlussstelle 16 ist an der zweiten Seite 14b des Quaders positioniert. An der dritten Seite 14c des Quaders ist die Anbindungsstelle 17 positioniert. Die Werkzeugmaschine 1 weist gemäß der vierten Ausführungsform eine Steuerungseinrichtung 3 mit lediglich einer Verbindungseinrichtung 19 samt fünf Verbindungsleitungen 19a, 19b, 19c, 19d, 19e auf. Die fünf Verbindungsleitungen 19a, 19b, 19c, 19d, 19e sind mit den fünf Anbindungselementen 17a, 17b, 17c, 17d, 17e der Anbindungsstelle 17 verbunden. Die Anbindungselemente 17a, 17b, 17c, 17d, 17e sind wiederum über entsprechende Anbindungsleitungen 12a, 12b, 12c, 12d, 12e mit den vier Anschlusselementen 15a, 15b, 15c, 15d der ersten Anschlussstelle 15 sowie mit den fünf Anschlusselementen 16a, 16b, 16c, 16d, 16e der zweiten Anschlussstelle 16 verbunden. Fig. 7 zeigt die Schnittstelleneinrichtung 4 in der ersten Position, in welcher ein erster Akkumulator 30 mit der ersten Anschlussstelle 15 verbunden werden kann. Fig. 8 zeigt die Schnittstelleneinrichtung 4 in der zweiten Position, in welcher ein zweiter Akkumulator 40 mit der zweiten Anschlussstelle 16 verbunden werden kann. Um die Schnittstelleneinrichtung 4 von der ersten Position in die zweite Position zu bringen, muss die Schnittstelleneinrichtung 4 von der Akku-Halterung 2 der Werkzeugmaschine 1 gelöst werden, um 180° entsprechend gedreht werden und wieder mit der Akku-Halterung 2 der Werkzeugmaschine 1 verbunden werden.

Wenn sich die Schnittstelleneinrichtung 4 in der ersten Position befindet und ein erster Akkumulator 30 mit der ersten Anschlussstelle 15 verbunden ist, erkennt die Steuerungseinrichtung 4, dass die vier Anschlusselemente 15a, 15b, 15c, 15d der ersten Anschlussstelle 15 mit den vier Kontakten 30a des ersten Akkumulators 30 verbunden sind. Wegen der Verbindung der vier Anschlusselemente 15a, 15b, 15c, 15d der ersten Anschlussstelle 15 an den jeweils besetzten Verbindungsleitungen 19a, 19b, 19c, 19d, 19e erkennt die Steuerungseinrichtung 3, dass ein erster Akkumulator 30 mit der ersten Anschlussstelle 15 verbunden ist. Als Folge dessen wird die erste Konfiguration zur Versorgung der Werkzeugmaschine 1 mit elektrischer Spannung durch den ersten Akkumulator 30 in der Steuerungseinrichtung 3 ausgewählt und eingestellt.

Wenn sich nun die Schnittstelleneinrichtung 4 in der zweiten Position befindet und ein zweiter Akkumulator 40 mit der zweiten Anschlussstelle 16 verbunden ist, erkennt die Steuerungseinrichtung 3, dass die fünf Anschlusselemente 16a, 16b, 16c, 16d, 16e der zweiten Anschlussstelle 16 mit den fünf Kontakten 40a des zweiten Akkumulators 40 verbunden sind.

Wegen der Verbindung der fünf Anschlusselemente 16a, 16b, 16c, 16d, 16e der zweiten Anschlussstelle 16 an den jeweils besetzten Verbindungsleitungen 19a, 19b, 19c, 19d, 19e erkennt die Steuerungseinrichtung 3, dass ein zweiter Akkumulator 40 mit der zweiten Anschlussstelle 16 verbunden ist. Als Folge dessen wird die zweite Konfiguration zur Versorgung der Werkzeugmaschine 1 mit elektrischer Spannung durch den zweiten Akkumulator 40 in der Steuerungseinrichtung 3 ausgewählt und eingestellt.

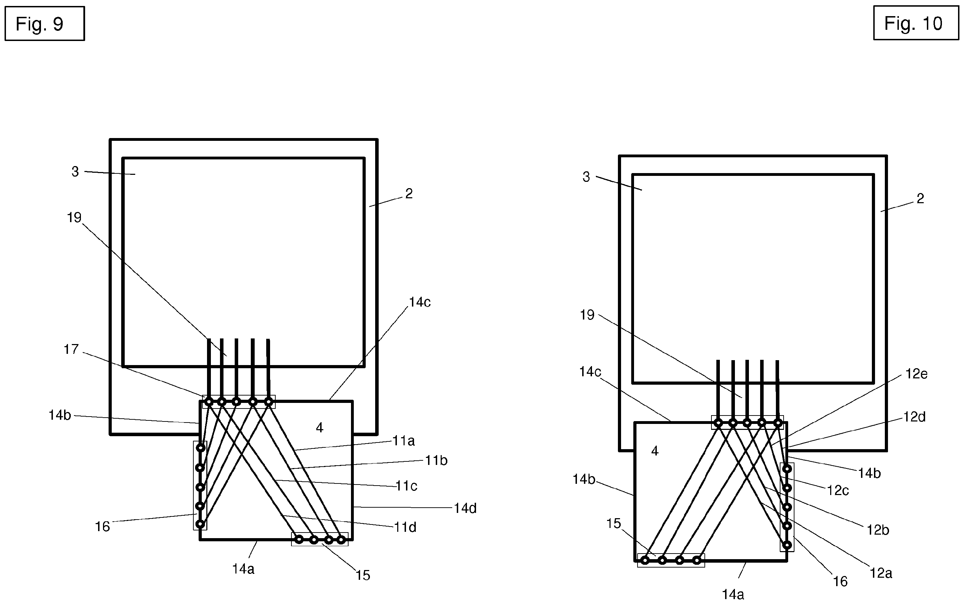

In Fig. 9 und 10 ist eine fünfte Ausführungsform der Werkzeugmaschine 1 dargestellt. Die fünfte Ausführungsform der Werkzeugmaschine 1 ist im Wesentlichen identisch mit der ersten und zweiten Ausführungsform der Werkzeugmaschine 1. Im Gegensatz zu der ersten und zweiten Ausführungsform ist die Schnittstelleneinrichtung 4 in Form eines Quaders ausgestaltet. In den Fig. 9 und 10 ist lediglich eine erste Seite 14a, eine zweite Seite 14b, eine dritte Seite 14c und eine vierte Seite 14d dargestellt. Die Steuerungseinrichtung 3 enthält eine Verbindungseinrichtung 19 mit fünf Verbindungsleitungen 19a, 19b, 19c, 19d, 19e. Die Schnittstelleneinrichtung 4 enthält eine erste Anschlussstelle 15 mit vier Anschlusselementen 15a, 15b, 15c, 15d sowie eine zweite Anschlussstelle 16 mit fünf Anschlusselementen 16a, 16b, 16c, 16d, 16e. Darüber hinaus enthält die Schnittstelleneinrichtung 4 eine erste Anbindungsstelle 17 mit vier Anbindungselementen 17a, 17b, 17c, 17d sowie eine zweite Anbindungsstelle 18 mit fünf Anbindungselementen 18a, 18b, 18c, 18d, 18e. Die erste Anschlussstelle 15 ist an der zweiten Seite 14b des Quaders positioniert. An der vierten Seite 14d des Quaders ist die zweite Anschlussstelle 16 positioniert. Die erste Anbindungsstelle 17 ist an der dritten Seite 14c des Quaders und die zweite Anbindungsstelle 18 ist an der ersten Seite 14a des Quaders positioniert.

Fig. 9 zeigt die Schnittstelleneinrichtung 4 in der ersten Position, wobei die vier Anschlusselemente 15a, 15b, 15c, 15d der ersten Anschlussstelle 15 über die vier Anbindungsleitungen 11a, 11b, 11c, 11d mit den vier Anbindungselementen 17a, 17b, 17c, 17d der ersten Anbindungsstelle 17 verbunden sind. In der ersten Position sind lediglich vier der fünf Verbindungsleitungen 19a, 19b, 19c, 19d, 19e der Verbindungseinrichtung 19 belegt. Die Verbindungsleitung 19c ist nicht belegt. Durch die Belegung von nur vier der fünf Verbindungsleitungen 19a, 19b, 19c, 19d, 19e erkennt die Steuerungseinrichtung 3, dass sich die Schnittstelleneinrichtung 4 in der ersten Position befindet und das ein erster Akkumulator 30 an der ersten Anschlussstelle 15 angeschlossen ist oder angeschlossen werden kann. Aufgrund des Erkennens der ersten Position und des ersten Akkumulators 30 wird eine erste Konfiguration zur Versorgung der Werkzeugmaschine 1 mit elektrischer Spannung durch den ersten Akkumulator 30 in der Steuerungseinrichtung 3 ausgewählt und eingestellt.

Um die Schnittstelleneinrichtung 4 von der ersten Position in die zweite Position zu wechseln, muss die Schnittstelleneinrichtung 4 von der Akku-Halterung 2 der Werkzeugmaschine 1 gelöst, um 180° in Pfeilrichtung R gedreht und wieder mit der Akku-Halterung 2 der Werkzeugmaschine 1 verbunden werden.

Fig. 10 zeigt die Schnittstelleneinrichtung 4 in der zweiten Position, wobei die fünf Anschlusselemente 16a, 16b, 16c, 16d, 16e der zweiten Anschlussstelle 16 über die Anbindungsleitungen 12a, 12b, 12c, 12d, 12e mit den fünf Anbindungselementen 18a, 18b, 18c, 18d, 18e der zweiten Anbindungsstelle 18 verbunden sind. In der zweiten Position sind die fünf Verbindungsleitungen 19a, 19b, 19c, 19d, 19e der Verbindungseinrichtung 19 belegt. Durch die Belegung der fünf Verbindungsleitungen 19a, 19b, 19c, 19d, 19e erkennt die Steuerungseinrichtung 3, dass sich die Schnittstelleneinrichtung 4 in der zweiten Position befindet und das ein zweiter Akkumulator 40 an der zweiten Anschlussstelle 16 angeschlossen ist oder angeschlossen werden kann. Aufgrund des Erkennens der zweiten Position und des zweiten Akkumulators 40 wird eine zweite Konfiguration zur Versorgung der Werkzeugmaschine 1 mit elektrischer Spannung durch den zweiten Akkumulator 40 in der Steuerungseinrichtung 3 ausgewählt und eingestellt.

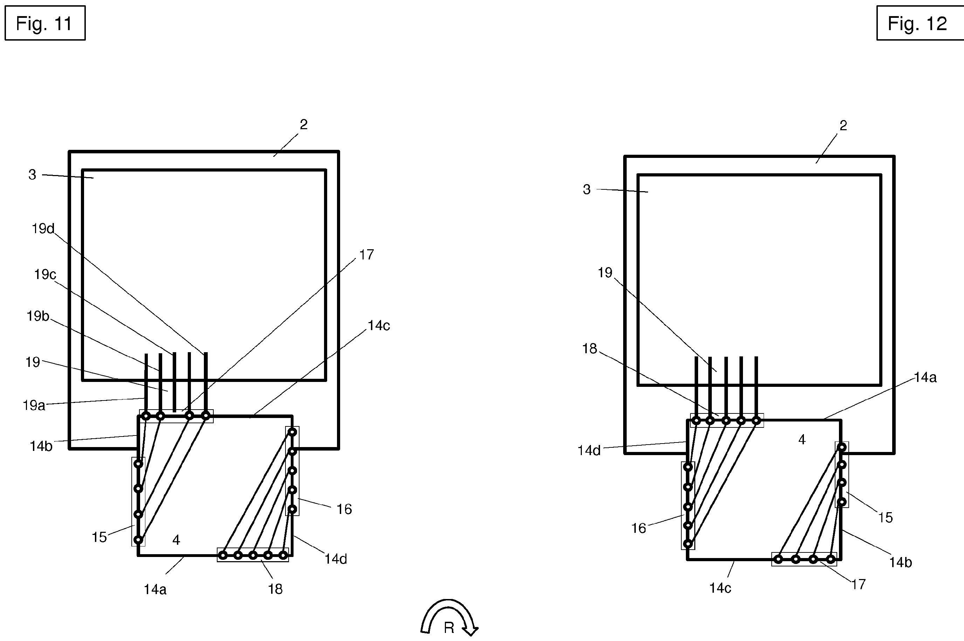

In Fig. 11 und 12 ist eine sechste Ausführungsform der Werkzeugmaschine 1 dargestellt. Die sechste Ausführungsform der Werkzeugmaschine 1 ist im Wesentlichen identisch mit der fünften Ausführungsform der Werkzeugmaschine 1. Die Schnittstelleneinrichtung 4 ist in Form eines Quaders ausgestaltet. In den Fig. 11 und 12 ist lediglich eine erste Seite 14a, eine zweite Seite 14b, eine dritte Seite 14c und eine vierte Seite 14d dargestellt.

Im Unterscheid zu der fünften Ausführungsform der Werkzeugmaschine 1 enthält die Steuerungseinrichtung 3 gemäß der sechsten Ausführungsform eine der Werkzeugmaschine 1 eine erste Platine 21 mit einer ersten Verbindungseinrichtung 19 samt vier Verbindungsleitungen 19a, 19b, 19c, 19d sowie eine zweite Platine 22 mit einer zweiten Verbindungseinrichtung 20 samt fünf Verbindungsleitungen 20a, 20b, 20c, 20d, 20e. Die erste Platine 21 enthält eine erste Konfiguration zur Versorgung der Werkzeugmaschine 1 mit elektrischer Spannung durch den ersten Akkumulator 30 und die zweite Platine 22 enthält eine zweite Konfiguration zur Versorgung der Werkzeugmaschine 1 mit elektrischer Spannung durch den zweiten Akkumulator 40.

Die Schnittstelleneinrichtung 4 gemäß der sechsten Ausführungsform ist identisch mit der Schnittstelleneinrichtung 4 gemäß der fünften Ausführungsform.

Die erste Verbindungseinrichtung 19 dient zur Verbindung der ersten Platine 21 mit der ersten Anbindungsstelle 17 und die zweite Verbindungseinrichtung 20 dient zur Verbindung der zweiten Platine 22 mit der zweiten Anbindungsstelle 18. Die vier Anbindungselemente 17a, 17b, 17c, 17d der ersten Anbindungsstelle 17 sind über die vier Anbindungsleitungen 11a, 11b, 11c, 11d mit den vier Anschlusselementen 15a, 15b, 15c, 15d der ersten Anschlussstelle 15 verbunden. Die fünf Anbindungselemente 18a, 18b, 18c, 18d, 18e der zweiten Anbindungsstelle 18 sind über die fünf Anbindungsleitungen 12a, 12b, 12c, 12d, 12e mit den fünf Anschlusselementen 16a, 16b, 16c, 16d, 16e der zweiten Anschlussstelle 16 verbunden.

Wenn sich die Schnittstelleneinrichtung 4 in der ersten Position befindet (vgl. Fig. 11), sind die vier Verbindungsleitungen 19a, 19b, 19c, 19d der ersten Verbindungseinrichtung 19 mit den vier Anbindungselementen 17a, 17b, 17c, 17d der ersten Anbindungsstelle 17 verbunden. Über die vier Anbindungsleitungen 11a, 11b, 11c, 11d sind die vier Anbindungselemente 17a, 17b, 17c, 17d mit den vier Anschlusselementen 15a, 15b, 15c, 15d der ersten Anschlussstelle 15 verbunden. Ein erster Akkumulator 30 kann nun mit der ersten Anschlussstelle 15 verbunden werden. Wenn sich die Schnittstelleneinrichtung 4 in der ersten Position befindet, erkennt die erste Platine 21 anhand der Belegung der vier Verbindungsleitungen 19a, 19b, 19c, 19d durch die vier Anbindungselemente 17a, 17b, 17c, 17d der ersten Anbindungsstelle 17, dass die Schnittstelleneinrichtung 4 in der ersten Position eingestellt ist und dass ein erster Akkumulator 30 mit der ersten Anschlussstelle 15 verbunden ist oder verbunden werden kann. Als Folge dessen wird die erste Konfiguration zur Versorgung der Werkzeugmaschine 1 mit elektrischer Spannung durch den ersten Akkumulator 30 in der ersten Platine 21 der Steuerungseinrichtung 3 aktiviert.

Um die als Quader ausgestaltete Schnittstelleneinrichtung 4 gemäß der sechsten Ausführungsform der Werkzeugmaschine 1 von der ersten Position (Fig. 11) in die zweite Position (Fig. 12) zu bewegen, wird die Schnittstelleneinrichtung 4 von Akku-Halterung 2 der Werkzeugmaschine 1 entfernt, entsprechend um 180° in Pfeilrichtung R gedreht und wieder mit Akku-Halterung 2 der Werkzeugmaschine 1 verbunden (vgl. Fig. 11 zu Fig. 12).

Wenn sich die Schnittstelleneinrichtung 4 nun in der zweiten Position befindet (vgl. Fig. 12), sind die fünf Verbindungsleitungen 20a, 20b, 20c, 20d, 20e der zweiten Verbindungseinrichtung 20 mit den fünf Anbindungselementen 18a, 18b, 18c, 18d, 18e der zweiten Anbindungsstelle 18 verbunden. Über fünf Anbindungsleitungen 12a, 12b, 12c, 12d, 12e sind die fünf Anbindungselemente 17a, 17b, 17c, 17d, 17e mit den fünf Anschlusselementen 16a, 16b, 16c, 16d, 16e der zweiten Anschlussstelle 16 verbunden. Ein zweiter Akkumulator 40 kann nun mit der zweiten Anschlussstelle 16 verbunden werden. Wenn sich die Schnittstelleneinrichtung 4 in der zweiten Position befindet, erkennt die zweite Platine 22 anhand der Belegung der fünf Verbindungsleitungen 20a, 20b, 20c, 20d, 20e durch die fünf Anbindungselemente 18a, 18b, 18c, 18d, 18e der zweiten Anbindungsstelle 18, dass die Schnittstelleneinrichtung 4 in der zweiten Position eingestellt ist und dass ein zweiter Akkumulator 40 mit der zweiten Anschlussstelle 16 verbunden ist oder verbunden werden kann. Als Folge dessen wird die zweite Konfiguration zur Versorgung der Werkzeugmaschine 1 mit elektrischer Spannung durch den zweiten Akkumulator 40 in der zweiten Platine 22 der Steuerungseinrichtung 4 aktiviert.

Entsprechend weiterer nicht in den Figuren dargestellter oder näher beschriebener Ausführungsformen ist es möglich, dass die Schnittstelleneinrichtung 4 gemäß der dritten bis sechsten Ausführungsform der Werkzeugmaschine 1 (vgl. Fig. 5 bis 12) nicht in Form eines Quaders ausgestaltet ist, sondern in einer anderen geeigneten Form ausgebildet ist.

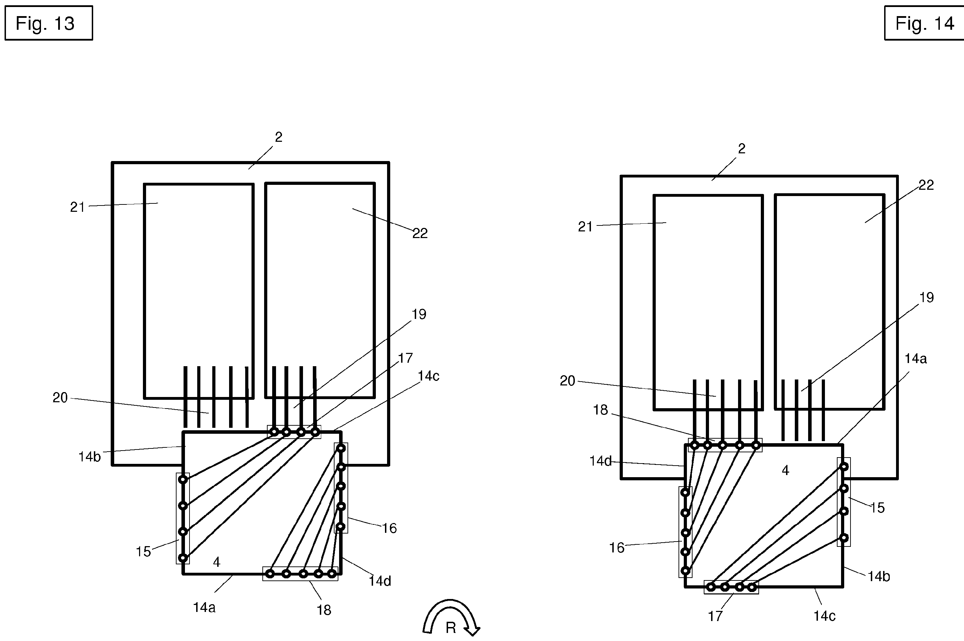

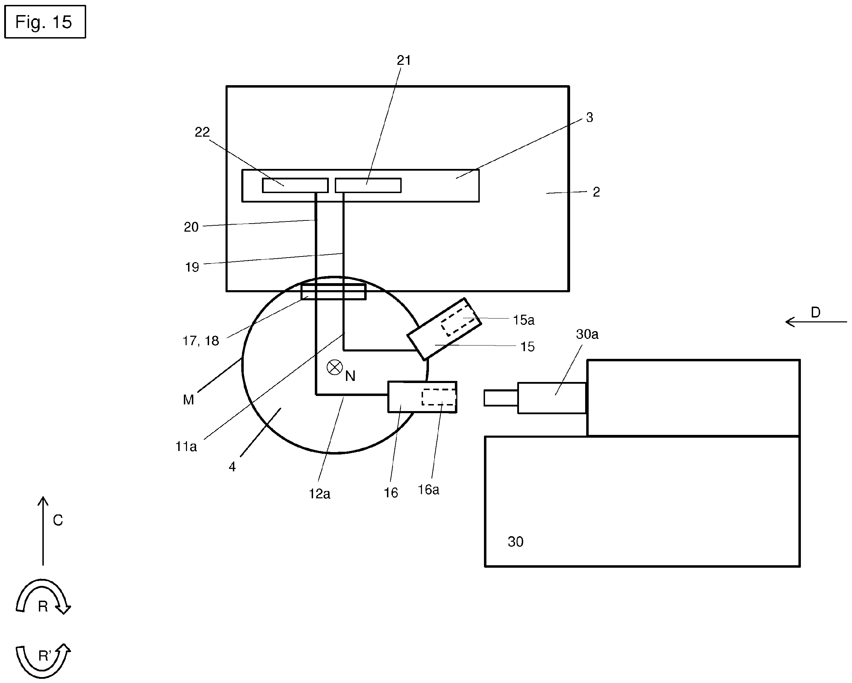

In Fig. 13, 14, 15 und 16 ist eine siebte Ausführungsform der Werkzeugmaschine 1 dargestellt, welche im Wesentlichen identisch zu der sechsten Ausführungsform der Werkzeugmaschine 1 ist. In den Fig. 13 ist die Werkzeugmaschine 1 gemäß der siebten Ausführungsform zusammen mit einem ersten Akkumulator 30 gezeigt. In den Fig. 15 ist die Werkzeugmaschine 1 gemäß der siebten Ausführungsform zusammen mit einem zweiten Akkumulator 40 gezeigt.

Gemäß der siebten Ausführungsform und im Unterscheid zu der sechsten Ausführungsform weist die Schnittstelleneinrichtung 4 eine zylindrische Form mit einer im Wesentlichen kreisrunden Querschnittsfläche auf.

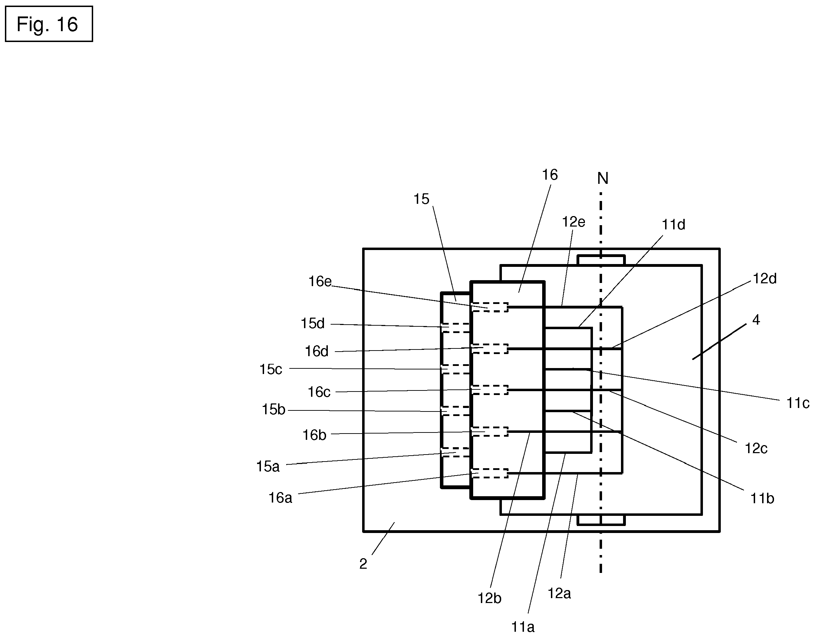

Die Schnittstelleneinrichtung 4 ist reversibel von der ersten Position (Fig. 13, 14) zu der zweiten Position (Fig. 15, 16) und dabei relativ zu der Akku-Halterung 2 in Richtung R bzw. R' um die Achse N schwenkbar. Die erste Anschlussstelle 15 und die zweite Anschlussstelle 16 sind so an der Mantelfläche M der als Zylinder ausgestalteten Schnittstelleneinrichtung 4 positioniert sind, dass die erste Anschlussstelle 15 in Richtung C unter der zweiten Anschlussstelle 16 angeordnet ist.

Die Verbindung der ersten Anschlussstelle 15 mit der ersten Platine 21 der Steuerungseinrichtung 3 über die vier Anbindungsleitungen 17a, 17b, 17c, 17d und vier Verbindungsleitungen 19a, 19b, 19c, 19d sowie die Verbindung der zweiten Anschlussstelle 16 mit der zweiten Platine 22 der Steuerungseinrichtung 3 über die fünf Anbindungsleitungen 18a, 18b, 18c, 18d, 18e und fünf Verbindungsleitungen 20a, 20b, 20c, 20d, 20e entspricht der Ausführung in Fig. 11 und 12.

Um eine Kontakte 30a des ersten Akkumulators 30 an die erste Anschlussstelle 15 der Schnittstelleneinrichtung 4 anzuschließen, wird die Schnittstelleneinrichtung 4 in die erste Position bewegt und der erste Akkumulator 30 in Richtung D auf die Schnittstelleneinrichtung 4 bewegt (vgl. Fig. 13). Wenn die Kontakte 30a des ersten Akkumulators 30 mit der ersten Anschlussstelle 15 verbunden ist, wird die erste Konfiguration zur Versorgung der Werkzeugmaschine 1 mit elektrischer Spannung durch den ersten Akkumulator 30 in der ersten Platine 21 der Steuerungseinrichtung 4 aktiviert.

Um hingegen eine Kontakte 40a des zweiten Akkumulators 40 an die zweite Anschlussstelle 16 der Schnittstelleneinrichtung 4 anzuschließen, wird die Schnittstelleneinrichtung 4 in die zweite Position bewegt und der zweite Akkumulator 40 in Richtung D auf die Schnittstelleneinrichtung 4 bewegt (vgl. Fig. 15). Wenn die Kontakte 40a des zweiten Akkumulators 40 mit der zweiten Anschlussstelle 16 verbunden ist, wird die zweite Konfiguration zur Versorgung der Werkzeugmaschine 1 mit elektrischer Spannung durch den zweiten Akkumulator 40 in der zweiten Platine 22 der Steuerungseinrichtung 4 aktiviert.

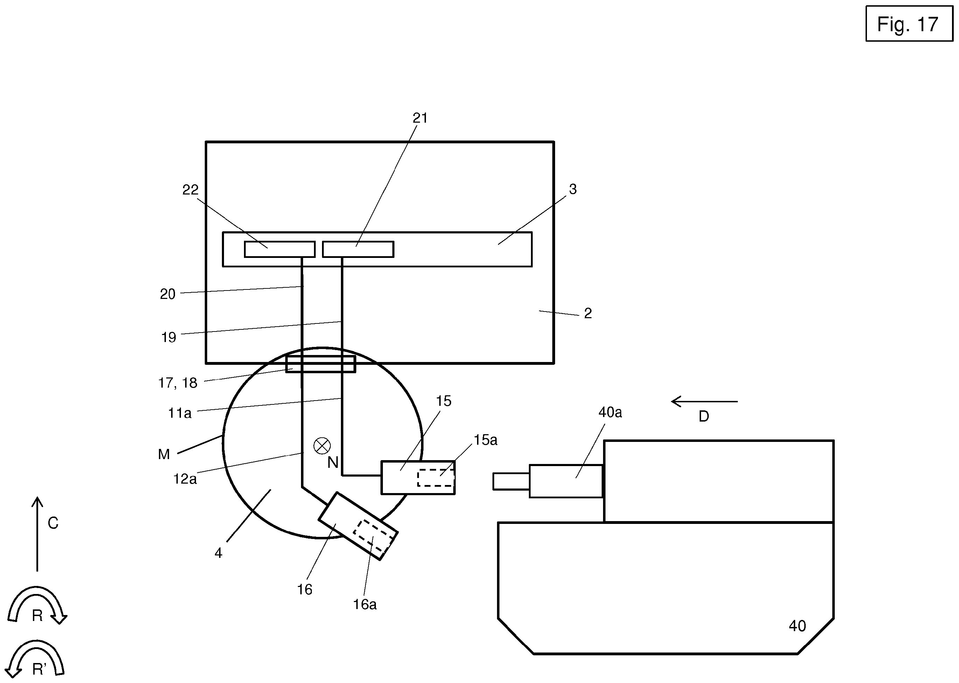

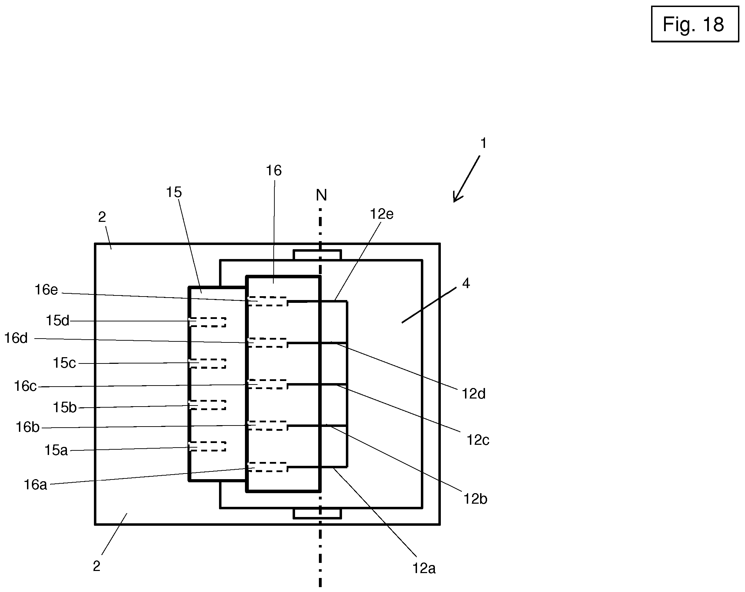

In Fig. 17 und 18 ist eine achte Ausführungsform der Werkzeugmaschine 1 dargestellt, welche im Wesentlichen identisch zu der vierten Ausführungsform der Werkzeugmaschine 1 ist. In den

Fig. 17 ist die Werkzeugmaschine 1 gemäß der achten Ausführungsform zusammen mit einem ersten Akkumulator 30 gezeigt. In den Fig. 18 ist die Werkzeugmaschine 1 gemäß der achten Ausführungsform zusammen mit einem zweiten Akkumulator 40 gezeigt.

Die der Aufbau der Werkzeugmaschine 1 und der Schnittstelleneinrichtung 4 gemäß der achten Ausführungsform entspricht im Wesentlichen dem Aufbau der Werkzeugmaschine 1 und der Schnittstelleneinrichtung 4 gemäß der siebten Ausführungsform (vgl. Fig. 13, 14, 15 und 16). Im Unterschied zu der sechsten Ausführungsform enthält die Werkzeugmaschine 1 lediglich eine Verbindungseinrichtung 20 samt fünf Verbindungsleitungen 20a, 20b, 20c, 20d, 20e zur Verbindung der Schnittstelleneinrichtung 4 mit der Steuerungseinrichtung 3.

Um die Kontaktstelle 30a des ersten Akkumulators 30 an die erste Anschlussstelle 15 der Schnittstelleneinrichtung 4 anzuschließen, wird die Schnittstelleneinrichtung 4 in die erste Position bewegt und der erste Akkumulator 30 in Richtung D auf die Schnittstelleneinrichtung 4 bewegt (vgl. Fig. 17). Wenn die Kontakte 30a des ersten Akkumulators 30 mit der ersten Anschlussstelle 15 verbunden ist, wird die erste Konfiguration zur Versorgung der Werkzeugmaschine 1 mit elektrischer Spannung durch den ersten Akkumulator 30 in der Platine 50 der Steuerungseinrichtung 3 aktiviert.

Um hingegen die Kontaktstelle 40a des zweiten Akkumulators 40 an die zweite Anschlussstelle 16 der Schnittstelleneinrichtung 4 anzuschließen, wird die Schnittstelleneinrichtung 4 in die zweite Position bewegt und der zweite Akkumulator 40 in Richtung D auf die Schnittstelleneinrichtung 4 bewegt (vgl. Fig. 18). Wenn die Kontaktstelle 40a des zweiten Akkumulators 40 mit der zweiten Anschlussstelle 16 verbunden ist, wird die zweite Konfiguration zur Versorgung der Werkzeugmaschine 1 mit elektrischer Spannung durch den zweiten Akkumulator 40 in der Platine 50 der Steuerungseinrichtung 3 aktiviert.

Die Aktivierung der ersten oder zweiten Konfiguration zur Versorgung der Werkzeugmaschine 1 mit elektrischer Spannung durch den ersten Akkumulator 30 oder zweiten Akkumulators 40 erfolgt nachdem die Steuerungseinrichtung 3 erkennt, dass der erste Akkumulator 30 oder zweite Akkumulator 40 mit der ersten Anschlussstelle 15 oder zweiten Anschlussstelle 16 verbunden ist. Die Erkennung geschieht anhand der Einstellung der Schnittstelleneinrichtung 4 in der ersten oder zweiten Position mittels eines nicht gezeigten Mikroschalters.

Alternativ erfolgt die Erkennung anhand der Übertragung einer Information bzw. Datensatzes über eine der Anbindungsleitungen 11a, 11b, 11c, 11d, 12a, 12b, 12c, 12d, 12e und Verbindungsleitungen 20a, 20b, 20c, 20d, 20e von dem jeweiligen Akkumulator 30, 40 zu der Steuerungseinrichtung 3. Der jeweilige erste oder zweite Akkumulator 30, 40 übersendet der Steuerungseinrichtung 3 eine Kennung für seine Identifikation.

Alternativ erfolgt die Erkennung anhand der Anzahl der jeweils belegten Verbindungsleitungen 20a, 20b, 20c, 20d, 20e, wobei lediglich vier Verbindungsleitungen 20a, 20b, 20d, 20e belegt sind, wenn der erste Akkumulator 30 mit der ersten Anschlussstelle 15 verbunden ist und hingegen fünf Verbindungsleitungen 20a, 20b, 20c, 20d, 20e belegt sind, wenn der zweite Akkumulator 40 mit der zweiten Anschlussstelle 16 verbunden ist. Die Belegung der Verbindungsleitungen 20a, 20b, 20c, 20d, 20e wird von der Steuerungseinrichtung 3 erkannt, wodurch entsprechend die erste Konfiguration oder zweite Konfiguration zur Versorgung der Werkzeugmaschine 1 mit elektrischer Spannung durch den ersten Akkumulator 30 oder zweiten Akkumulators 40 aktiviert wird.

## Patentansprüche

1. Werkzeugmaschine (1), enthaltend
- eine Steuerungseinrichtung (3); und
- wenigstens eine elektromechanische Schnittstelleneinrichtung (4) zum Verbinden wenigstens eines Akkumulators (30, 40) mit der Werkzeugmaschine (1) sowie zum Versorgen der Werkzeugmaschine (1) mit einer elektrischer Spannung aus dem Akkumulator (30, 40),
**dadurch gekennzeichnet, dass** die Schnittstelleneinrichtung (4) wenigstens eine erste Anschlussstelle (15) und eine zweite Anschlussstelle (16) enthält und die Schnittstelleneinrichtung (4) in wenigstens eine erste Position und in eine zweite Position einstellbar ist, wobei die erste Anschlussstelle (15) zum Versorgen der Werkzeugmaschine (1) mit elektrischer Spannung aus einem ersten Akkumulator (30) verwendbar ist, wenn die Schnittstelleneinrichtung (4) in der ersten Position eingestellt ist und die zweite Anschlussstelle (16) zum Versorgen der Werkzeugmaschine (1) mit elektrischer Spannung aus einem zweiten Akkumulator (40) verwendbar ist, wenn die Schnittstelleneinrichtung (4) in der zweiten Position eingestellt ist.

2. Werkzeugmaschine (1) nach Anspruch 1,
**dadurch gekennzeichnet, dass** die erste Anschlussstelle (15) eine erste Anzahl an Anschlusselementen (15a, 15b, 15c, 15d) und die zweite Anschlussstelle (16) eine zweite Anzahl an Anschlusselementen (16a, 16b, 16c, 16d, 16e) enthält, wobei die erste Anzahl an Anschlusselementen (15a, 15b, 15c, 15d) einer Anzahl an Kontaktelementen des ersten Akkumulators (30) und die zweite Anzahl an Anschlusselementen (16a, 16b, 16c, 16d, 16e) einer Anzahl an Kontaktelementen des zweiten Akkumulators (40) entspricht.

3. Werkzeugmaschine (1) nach Anspruch 1 oder 2,
**dadurch gekennzeichnet, dass** eine erste Konfiguration zum Versorgen der Werkzeugmaschine (1) mit elektrischer Spannung aus einem ersten Akkumulator (30) gewählt wird, wenn die Schnittstelleneinrichtung (4) in der ersten Position eingestellt ist und der erste Akkumulator (30) mit der ersten Anschlussstelle (15) verbunden ist, und dass eine zweite Konfiguration zum Versorgen der Werkzeugmaschine (1) mit elektrischer Spannung aus einem zweiten Akkumulator (40) gewählt wird, wenn die Schnittstelleneinrichtung (4) in der zweiten Position eingestellt ist und der zweite Akkumulator (40) mit der zweiten Anschlussstelle (16) verbunden ist.

4. Werkzeugmaschine (1) nach wenigstens einem der Ansprüche 1 bis 3,
**dadurch gekennzeichnet, dass** die Schnittstelleneinrichtung (4) eine Anbindungsstelle (18) mit einer Anzahl an Anbindungselementen (18a, 18b, 18c, 18d, 18e) zum Verbinden der Schnittstelleneinrichtung (4) mit der Steuerungseinrichtung (3) enthält, wobei die Anzahl an Anbindungselementen (18a, 18b, 18c, 18d, 18e) der größeren Anzahl an Anschlusselementen (15a, 15b, 15c, 15d; 16a, 16b, 16c, 16d, 16e) der ersten oder zweiten Anschlussstelle (15, 16) entspricht.

5. Werkzeugmaschine (1) nach wenigstens einem der Ansprüche 1 bis 3,
**dadurch gekennzeichnet, dass** die Schnittstelleneinrichtung (4) eine erste Anbindungsstelle (17) und eine zweite Anbindungsstelle (18) enthält zum Verbinden der Schnittstelleneinrichtung (4) mit der Steuerungseinrichtung (3), wobei die erste Anbindungsstelle (17) eine erste Anzahl an Anbindungselementen (17a, 17b, 17c, 17d) und die zweite Anbindungsstelle (18) eine zweite Anzahl an Anbindungselementen (18a, 18b, 18c, 18d, 18e) enthält, wobei die erste Anzahl an Anbindungselementen (17a, 17b, 17c, 17d) der ersten Anzahl an Anschlusselementen (15a, 15b, 15c, 15d) und die zweite Anzahl an Anbindungselementen (18a, 18b, 18c, 18d, 18e) der zweiten Anzahl an Anschlusselementen (16a, 16b, 16c, 16d, 16e) entspricht.

6. Werkzeugmaschine (1) nach Anspruch 4 oder 5,
**dadurch gekennzeichnet, dass** anhand der Anzahl an Verbindungen zwischen Anschlusselementen (15a, 15b, 15c, 15d; 16a, 16b, 16c, 16d, 16e) und Anbindungselementen (17a, 17b, 17c, 17d; 18a, 18b, 18c, 18d, 18e) die erste oder zweite Position der Schnittstelleneinrichtung (4) und/oder der erste oder zweite Akkumulator (30, 40), welcher mit der Schnittstelleneinrichtung (4) verbunden ist, erkennbar ist.

7. Werkzeugmaschine (1) nach wenigstens einem der Ansprüche 1 bis 6,
**dadurch gekennzeichnet, dass** mindestens ein Anschlusselement (15a, 15b, 15c, 15d) der ersten Anschlussstelle (15) sowie mindestens ein Anschlusselement (16a, 16b, 16c, 16d, 16e) der zweiten Anschlussstelle (16) wenigstens zum Empfangen von Informationen von dem ersten Akkumulator (30) und dem zweiten Akkumulator (40) an die Werkzeugmaschine (1) ausgestaltet ist, sodass entsprechend dem jeweils angeschlossenen ersten oder zweiten Akkumulator (30, 40) eine erste Konfiguration zum Versorgen der Werkzeugmaschine (1) mit elektrischer Spannung aus einem ersten Akkumulator (30) oder eine zweite Konfiguration zum Versorgen der Werkzeugmaschine (1) mit elektrischer Spannung aus einem zweiten Akkumulator (40) einstellbar ist.

8. Werkzeugmaschine (1) nach wenigstens einem der Ansprüche 1 bis 7,
**dadurch gekennzeichnet, dass** wenigstens ein Mikroschalter (5, 6) vorgesehen ist zum Erkennen, ob die Schnittstelleneinrichtung (4) in der ersten Position oder zweiten Position eingestellt ist.

## Claims

1. Power tool (1), containing
- a control device (3); and
- at least one electromechanical interface device (4) for connecting at least one rechargeable battery (30, 40) to the power tool (1) and for supplying the power tool (1) with an electrical voltage from the rechargeable battery (30, 40),
**characterized in that** the interface device (4) contains at least one first connection point (15) and one second connection point (16) and the interface device (4) can be set to at least one first position and to one second position, wherein the first connection point (15) can be used for supplying the power tool (1) with electrical voltage from a first rechargeable battery (30) when the interface device (4) is set in the first position and the second connection point (16) can be used for supplying the power tool (1) with electrical voltage from a second rechargeable battery (40) when the interface device (4) is set in the second position.

2. Power tool (1) according to Claim 1,
**characterized in that** the first connection point (15) contains a first number of connection elements (15a, 15b, 15c, 15d) and the second connection point (16) contains a second number of connection elements (16a, 16b, 16c, 16d, 16e), wherein the first number of connection elements (15a, 15b, 15c, 15d) corresponds to a number of contact elements of the first rechargeable battery (30) and the second number of connection elements (16a, 16b, 16c, 16d, 16e) corresponds to a number of contact elements of the second rechargeable battery (40).

3. Power tool (1) according to Claim 1 or 2,
**characterized in that** a first configuration for supplying the power tool (1) with electrical voltage from a first rechargeable battery (30) is selected when the interface device (4) is set in the first position and the first rechargeable battery (30) is connected to the first connection point (15), and **in that** a second configuration for supplying the power tool (1) with electrical voltage from a second rechargeable battery (40) is selected when the interface device (4) is set in the second position and the second rechargeable battery (40) is connected to the second connection point (16).

4. Power tool (1) according to at least one of Claims 1 to 3,
**characterized in that** the interface device (4) contains an attachment point (18) with a number of attachment elements (18a, 18b, 18c, 18d, 18e) for connecting the interface device (4) to the control device (3), wherein the number of attachment elements (18a, 18b, 18c, 18d, 18e) corresponds to the larger number of connection elements (15a, 15b, 15c, 15d; 16a, 16b, 16c, 16d, 16e) of the first or second connection point (15, 16).

5. Power tool (1) according to at least one of Claims 1 to 3,
**characterized in that** the interface device (4) contains a first attachment point (17) and a second attachment point (18) for connecting the interface device (4) to the control device (3), wherein the first attachment point (17) contains a first number of attachment elements (17a, 17b, 17c, 17d) and the second attachment point (18) contains a second number of attachment elements (18a, 18b, 18c, 18d, 18e), wherein the first number of attachment elements (17a, 17b, 17c, 17d) corresponds to the first number of connection elements (15a, 15b, 15c, 15d) and the second number of attachment elements (18a, 18b, 18c, 18d, 18e) corresponds to the second number of connection elements (16a, 16b, 16c, 16d, 16e).

6. Power tool (1) according to Claim 4 or 5,
**characterized in that** the first or second position of the interface device (4) and/or the first or second rechargeable battery (30, 40), which is connected to the interface device (4), can be identified on the basis of the number of connections between connection elements (15a, 15b, 15c, 15d; 16a, 16b, 16c, 16d, 16e) and attachment elements (17a, 17b, 17c, 17d; 18a, 18b, 18c, 18d, 18e).

7. Power tool (1) according to at least one of Claims 1 to 6,
**characterized in that** at least one connection element (15a, 15b, 15c, 15d) of the first connection point (15) and at least one connection element (16a, 16b, 16c, 16d, 16e) of the second connection point (16) are designed at least for receiving information from the first rechargeable battery (30) and the second rechargeable battery (40) at the power tool (1), so that, in accordance with the respectively connected first or second rechargeable battery (30, 40), a first configuration for supplying the power tool (1) with electrical voltage from a first rechargeable battery (30) or a second configuration for supplying the power tool (1) with electrical voltage from a second rechargeable battery (40) can be set.

8. Power tool (1) according to at least one of Claims 1 to 7,
**characterized in that** at least one microswitch (5, 6) is provided for identifying whether the interface device (4) is set in the first position or second position.

## Revendications

1. Machine-outil (1) contenant :
- un dispositif de commande (3) et
- au moins un dispositif électromécanique d'interfaçage (4) qui relie au moins un accumulateur (30, 40) à la machine-outil (1) et qui alimente la machine-outil (1) en une tension électrique provenant de l'accumulateur (30, 40),
**caractérisée en ce que**
le dispositif d'interfaçage (4) contient au moins un premier emplacement de raccordement (15) et un deuxième emplacement de raccordement (16) et **en ce que** le dispositif d'interfaçage (4) peut être placé dans au moins une première position et une deuxième position,
**en ce que** le premier emplacement de raccordement (15) peut être utilisé pour alimenter la machine-outil (1) en une tension électrique provenant d'un premier accumulateur (30) lorsque le dispositif d'interfaçage (4) a été placé dans la première position et
**en ce que** le deuxième emplacement de raccordement (16) peut être utilisé pour alimenter la machine-outil (1) en une tension électrique provenant d'un deuxième accumulateur (40) lorsque le dispositif d'interfaçage (4) a été placé dans la deuxième position.

2. Machine-outil (1) selon la revendication 1, **caractérisée en ce que** le premier emplacement de raccordement (15) contient un premier nombre d'éléments de raccordement (15a, 15b, 15c, 15d) et le deuxième emplacement de raccordement (16) un deuxième nombre d'éléments de raccordement (16a, 16b, 16c, 16d, 16e), le premier nombre d'éléments de raccordement (15a, 15b, 15c, 15d) correspondant au nombre d'éléments de contact du premier accumulateur (30) et le deuxième nombre d'éléments de raccordement (16a, 16b, 16c, 16d, 16e) correspondant au nombre d'éléments de contact du deuxième accumulateur (40).

3. Machine-outil (1) selon les revendications 1 ou 2, **caractérisée en ce qu'**une première configuration d'alimentation de la machine-outil (1) en une tension électrique provenant du premier accumulateur (30) est sélectionnée lorsque le dispositif d'interfaçage (4) est placé dans la première position et que le premier accumulateur (30) est raccordé au premier emplacement de raccordement (15) et **en ce qu'**une deuxième configuration d'alimentation de la machine-outil (1) en une tension électrique provenant du deuxième accumulateur (40) est sélectionnée lorsque le dispositif d'interfaçage (4) est placé dans la deuxième position et que le deuxième accumulateur (40) est raccordé au deuxième emplacement de raccordement (16).

4. Machine-outil (1) selon au moins l'une des revendications 1 à 3, **caractérisée en ce que** le dispositif d'interfaçage (4) contient un emplacement de raccordement (18) qui compte un premier nombre d'éléments de raccordement (18a, 18b, 18c, 18d, 18e) qui permettent de raccorder le dispositif d'interfaçage (4) au dispositif de commande (3), le nombre d'éléments de raccordement (18a, 18b, 18c, 18d, 18e) correspondant au nombre des éléments de raccordement (15a, 15b, 15c, 15d ; 16a, 16b, 16c, 16d, 16e) respectifs du premier et/ou du deuxième emplacement de raccordement (15, 16) qui est le plus grand.

5. Machine-outil (1) selon au moins l'une des revendications 1 à 3, **caractérisée en ce que** le dispositif d'interfaçage (4) contient un premier emplacement de raccordement (17) et un deuxième emplacement de raccordement (18) qui permettent de raccorder le dispositif d'interfaçage (4) au dispositif de commande (3), le premier emplacement de raccordement (17) comptant un premier nombre d'éléments de raccordement (17a, 17b, 17c, 17d) et le deuxième emplacement de raccordement (18) un deuxième nombre d'éléments de raccordement (18a, 18b, 18c, 18d, 18e), le premier nombre d'éléments de raccordement (17a, 17b, 17c, 17d) correspondant au premier nombre d'éléments de raccordement (15a, 15b, 15c, 15d) et le deuxième nombre d'éléments de raccordement (18a, 18b, 18c, 18d, 18e) correspondant au deuxième nombre d'éléments de raccordement (16a, 16b, 16c, 16d, 16e).

6. Machine-outil (1) selon les revendications 4 ou 5, **caractérisée en ce que** la première ou la deuxième position du dispositif d'interfaçage (4) et/ou le premier ou le deuxième accumulateur (30, 40) reliés au dispositif d'interfaçage (4) peuvent être détectés au moyen du nombre de liaisons entre les éléments de raccordement (15a, 15b, 15c, 15d ; 16a, 16b, 16c, 16d, 16e) et les éléments de raccordement (17a, 17b, 17c, 17d ; 18a, 18b, 18c, 18d, 18e).

7. Machine-outil (1) selon au moins l'une des revendications 1 à 6, **caractérisée en ce qu'**au moins un élément de raccordement (15a, 15b, 15c, 15d) du premier emplacement de raccordement (15) et au moins un élément de raccordement (16a, 16b, 16c, 16d, 16e) du deuxième emplacement de raccordement (16) sont configurés pour recevoir des informations du premier accumulateur (30) et du deuxième accumulateur (40) sur la machine-outil (1) de telle sorte que selon que c'est le premier ou le deuxième accumulateur (30, 40) qui est raccordé, une première configuration d'alimentation de la machine-outil (1) en une tension électrique provenant du premier accumulateur (30) est établie ou une deuxième configuration d'alimentation de la machine-outil (1) en une tension électrique provenant du deuxième accumulateur (40) est établie.

8. Machine-outil (1) selon au moins l'une des revendications 1 à 7, **caractérisée en ce que** au moins un micro-commutateur (5, 6) est prévu pour détecter si le dispositif d'interfaçage (4) est placé dans la première ou dans la deuxième position.
